Europäisches Patentamt

European Patent Office

Office européen des brevets

(11) Publication number: **0 508 539 A2**

## EUROPEAN PATENT APPLICATION

(21) Application number: 92200975.8

(51) Int. Cl.5: **C08G 65/48**

(22) Date of filing: **04.04.92**

(30) Priority: **11.04.91 IT MI910993**

(43) Date of publication of application:
**14.10.92 Bulletin 92/42**

(84) Designated Contracting States:
**AT BE CH DE DK ES FR GB GR LI LU MC NL PT SE**

(71) Applicant: **ENIRICERCHE S.p.A.**
**Corso Venezia 16**
**I-20121 Milan(IT)**
Applicant: **SNAM S.p.A.**
**Corso Venezia 16**
**I-20121 Milan(IT)**
Applicant: **AGIP PETROLI S.p.A.**
**Via Laurentina 449**
**I-00142 Roma(IT)**

(72) Inventor: **Roggero Arnaldo**
**Via Liberta 72**
**I-20097 San Donato Milanese Milan(IT)**

Inventor: **Pedretti Ugo**
**Via Pavoni 5**
**I-20159 Milan(IT)**
Inventor: **Gandini Alberto**
**Via Bottesini 9**
**I-20131 Milan(IT)**
Inventor: **Lanzini Luigi**
**Via Verdi 6-8**
**I-24050 Morengo (Bergamo = (IT)**
Inventor: **Sisto Raffaello**
**Via Antonino**
**Lo Surdo 41 I-00146 Rome(IT)**
Inventor: **Valentini Claudio**
**Via Giolitti 101**
**I-00185 Rome(IT)**

(74) Representative: **Roggero, Sergio**
**Ing. Barzanò & Zanardo Milano S.p.A. Via Borgonuovo 10**
**I-20121 Milano(IT)**

(54) **Preparation of poly-(2,6-dimethyl-P-oxyphenylene) functionalized with trialkyl-silyl and hydroxy-ethyl groups.**

(57) An improved preparation of a modified, amorphous poly-(2,6-dimethyl-p-oxyphenylene) (PPO), which preparation comprises:
- a first metallation of PPO by means of a metallating agent;
- a first functionalization of so metallated PPO by reaction with a halogen-trialkylsilane;
- a second metallation of silylated PPO;
- a second functionalization of said metallated silylated PPO by reaction with ethylene oxide.

The present invention relates to an improved process for prepararing a modified, amorphous poly-(2,6-dimethyl-p-oxyphenylene), useful for preparing flat, also asymmetrical, membranes, suitable for gas mixture separations.

In the art, gas-permeable polymeric membranes to be used in the separation of gas mixtures are known, such as, e.g., those disclosed by S.A. Stern, ACHEMA 1985, Plenary Lecture; and by H.B. Hopfenberg and V.T. Stannet in "Material Science of Synthetic Membranes", ACS Symposium, Series N. 269, Chapter 2. Among polymers regarded as suitable for that purpose, poly-(2,6-dimethyl-p-oxyphenylene) (designated in short form "PPO" in the following) is endowed with good selectivity for gases, but shows a poor permeability to them. Therefore, modified PPO's have been proposed in the art, which were designed to show good characteristics of permeability and selectivity in gas mixture separation, and to be easily transformed into membranes, in particular asymmetrical membranes. In particular, the modification of PPO was mostly accomplished by means of the introduction of functional groups, such as, e.g., trialkylsilyl groups and/or hydroxy-ethylene groups (U.S. 4,596,860, **European Patent Applns. Public. No. 0 360 318 and No. 0 408 125),** and hydroxyethyl-trialkylsilyl groups **(European Patent Appln. Public. No. 0 432 827).**

The processes adopted in the prior art in order to functionalize PPO normally consist of a PPO metallation step, in order to convert PPO into a metallated PPO, followed by a functionalization step, accomplished by means of the reaction with one or more functionalizing agent(s), such as, e.g., ethylene oxide and/or a halogen-trialkylsilane.

In particular, the metallation step is carried out, according to the prior art, with PPO being dissolved in an inert solvent normally selected from benzene, toluene, xylene, tetrahydrofuran, and the like. Basically, operating with PPO in solution derived from the need for uniformy distributing the metal throughout PPO, in order to have eventually a modified PPO with a uniform distribution of functional groups.

However, this route of solution reaction is affected by disadvantages deriving, above all, from the poor solubility of PPO in suitable solvents, such a solubility being of the order of 2-4 grams per each 100 ml of solvent under the conditions at which the metallation is carried out. This renders the process burdensome, and not attractive for an implementation on the commercial scale.

Finally, **European Patent Appln. public . No. 0 432 827** discloses a process for PPO metallation in suspension, more advantageous and cheaper than the solution process, because it makes it possible the reaction to be carried out at higher PPO concentrations.

The present Applicant found now a process for producing modified PPO, which makes it possible membranes with improved properties to be obtained, which are particularly suitable for the separation of oxygen/nitrogen mixtures.

In accordance therewith, the present invention relates to a process for preparing a modified, amorphous poly-(2,6-dimethyl-p-oxyphenylene) (PRO), which comprises metallating PRO in two separate steps, and reacting metallated PPO firstly with a halogen-trimethylsilane and then with ethylene oxide, said process being characterized by the following steps:

(I) a first metallation of PPO by means of a reaction of PPO with a metallating agent;

(II) a first functionalization of said metallated PPO, by reaction with a halogen-trialkylsilane;

(III) a second metallation of the resulting silylated PRO, by reaction of said silylated PRO with a further amount of metallating agent;

(IV) a second functionalization of said sylilated and metallated PPO, by reaction with ethylene oxide.

- with the total amount of metallating agent being comprised within the range of from 0.8 to 1.5 mol per each mol of monomer units contained in said PPO;

- with the amount of metallating agent used in said step (I) being comprised within the range of from 0.6 mol to 1 mol per each mol of monomer units contained in said PPO;

- with the amount of metallating agent used in said step (III) being comprised within the range of from 0.2 to 0.5 mol per each mol of monomer units contained in said PPO.

The PRO which is submitted to the process according to the present invention is a polymer known from the prior art, generally having a weight average molecular weight comprised within the range of from approximately 10,000 to approximately 80,000, with polydispersity values (i.e., the ratio of the weight average molecular weight to the number average molecular weight) comprised within the range of from about 1.4 to abut 4.5, which polymer is obtained in the art by submitting 2,6-xylenol to oxidative polymerization, in the presence of a catalyst, preferably selected from complex copper catalysts.

According to the present invention the metallation of such a PRO is carried out with said polymer being at least partially suspended in an inert organic solvent. Inert organic solvents suitable for the purpose according to the present invention are generally selected from the group consisting of liquid, aliphatic, cycloaliphatic or aromatic hydrocarbons, aliphatic ethers and cycloaliphatic ethers. Specific examples for such solvents are benzene, toluene, xylene and tetrahydrofuran.

According to the present invention, a suspension is prepared, which contains at least 5 parts by weight, up to 30 parts by weight and preferably from 6 to 10 parts by weight, of PPO per each 100 parts by volume of selected solvent. Under these conditions, most PPO exists as a solid material suspended in the solvent, and to this suspension the metallating agent is gradually added, either continuously or portionwise.

The metallating agent useful for the intended purpose can be an (alkali metal)-alkyl, or an alkali-metal hydride or an alkali-metal amide, and preferably a lithium-$(C_1-C_{12})$-alkyl, in particular n-butyl-lithium.

In general, in the step of PPO metallation the reaction is carried out at a temperature comprised within the range of from -30°C to 80°C and preferably at room temperature (20-25°C). It is of basic importance for the purposes of the present invention, that the metallating agent is added gradually to the suspension of PPO in the organic solvent. In particular, such an addition should be carried out over a time equal to, or longer than, about 15 minutes, and preferably over a time comprised within the range of from 20 to 45 minutes. Said addition can be carried out either continuously or intermittently, during the metallation reaction time. The metallation can furthermore be carried out in the presence of an activator normally selected from **tetramethylethylenediamine,** potassium tert.-butoxide and diazabicyclooctane. When an activator is used, the latter can be subdivided into portions, as a function of the amount of metallating agent, in such an amount as to have a molar ratio of the total metallating agent to the activator, comprised within the range of from 1:0.5 to 1:1.

The second reaction step consists in functionalizing the metallated PPO, obtained from the first step, with a halogen-trialkylsilane, preferably trimethyl-chloro-silane.

The reaction of metallated PRO and halogen-trialkyl-silane is carried out at a temperature comprised within the range of from 10°C to 80°C and preferably at room temperature (20-25°C), over a time of from 0.5 to 4 hours and preferably of the order of 2 hours. The functionalizing agent is added in such an amount, as to cause PPO's metallated sites to interact to a nearly complete extent.

After the two first steps of the process according to the present invention (i.e., partial metallation and subsequent functionalization with a halogen-trialkylsilane), the resulting functionalized PPO can be isolated and submitted to the subsequent conversion steps, or the whole reaction mixture can be fed as such to the subsequent steps, without the intermediate being isolated.

In the third reaction step, a second metallation is carried out according to such modalities as disclosed for the first step, and finally the fourth step consists of the functionalization with ethylene oxide. The latter is fed to silylated/metallated PPO, in the same organic solvent as used for the first metallation, at a temperature comprised within the range of from -30°C to 80°C, preferably at room temperature (20-25°C), and over a time of from 0.5 to 30 minutes, preferably of the order of 1-5 minutes. Also in this functionalization step, ethylene oxide is added in such an amount as to cause PPO's metallated sites to interact to a nearly complete extent.

Modified PPO obtained as disclosed hereinabove, can be separated from the reaction mixture by means of the usual separation techniques, and can be optionally submitted to purification treatments.

Said modified PPO is an amorphous solid material, with a glass transition temperature (Tg) comprised within the range of from 170°C to 220°C, and can be transformed into flat, homogeneous membranes or flat, asymmetrical membranes, in particular by means of the technique of phase reversal by coagulation in water. In the processes of separation of gas mixtures, such as, e.g., those gas mixtures which contain such components as carbon dioxide, methane, oxygen and nitrogen, the resulting membranes are more permeable and more selective than those prepared according to the prior art.

In present Applicant's opinion, the improved characteristics of modified PPO which can be obtained according to the present process, can be attributed to a higher silylation level on aromatic moieties, than on methyl moieties.

The following experimental examples are reported in order to better illustrate the present invention.

Example 1 - Continuous Synthesis

102 g (850 mmol) of PPO is charged to a jacketed reactor of 3 litres of capacity, kept under a flowing nitrogen stream, and equipped with mechanical stirring means, loading funnel, thermocouple well and pressure switch, and is suspended in 1.7 litres of tetrahydrofuran (THF). PPO used for the intended purpose displays the following characteristics:

* weight average molecular weight 42,000 g/mol;
* ratio of weight average molecular weight to number average molecular weight ($M_w/M_n$) 2.5;
* intrinsic viscosity (at 25°C in chloroform) 0.5 dl/g;
* glass transition temperature (Tg) 221°C.

The resulting suspension is thermostatted at 25°C; then, n-butyl-lithium (680 mmol; Li/RPO = 0.8) is added, with said total amount being subdivided into three portions of 226.7 mmol each, and each portion being added over an addition time of 3 minutes, and with time intervals between the addition of successive portions, of 5 minutes. The total metallation time is of about 30 minutes.

To the suspension of metallated PPO, 73.8 g (680 mmol; Si/Li = 1) of trimethylchlorosilane is then added and is allowed to react over a 60 minute reaction time.

The resulting solution is treated again firstly with a variable amount of lithium-n-butyl until the reaction solution turns into red (an evidence of the presence of metallated polymer) in order to purify the reaction mixture, prevailingly from any residues of unreacted trimethylchlorosilane, and subsequently with 170 mmol (Li/PPO = 0.2) of the same metallating agent, over a 15 minute time. Then, 7.5 g (170 mmol; EtO/Li = 0.2) of ethylene oxide is added and allowed to react over a 120 minute time.

The resulting modified PPO has a methyl silylation degree of 18.9 mol % and an aromatic-ring silylation degree of 34.4 mol %; the molar percentage of methyl-bonded -OH is of 6.9%; the molar percentage of ar-OH is of 7.6%.

Example 2 - Batchwise Synthesis

102 g (850 mmol) of PRO is charged to a jacketed reactor of 3 litres of capacity, kept under a flowing nitrogen stream, and equipped with mechanical stirring means, loading funnel, thermocouple well and pressure switch, and is suspended in 1.7 litres of tetrahydrofuran (THF). Said PPO has the same characteristics as reported in Example 1.

The resulting suspension is thermostatted at 25°C, and then n-butyl-lithium (680 mmol; Li/PRO = 0.8) is added, with said total amount being subdivided into three portions of 226.7 mmol each, and each portion being added over an addition time of 3 minutes, and with time intervals between the addition of successive portions, of 5 minutes. The total metallation time is of about 30 minutes.

To the suspension of metallated PRO, 73.8 g (680 mmol; Si/Li = 1) of trimethylchlorosilane is then added and is allowed to react over a 60 minute reaction time.

The resulting functionalized polymer is isolated by coagulation or stripping, and is dried at 80°C in a vacuum oven. The dried polymer is then dissolved again in tetrahydrofuran, is treated with n-butyl-lithium (170 mmol; Li/PPO = 0.2) and then with 7.5 g (170 mmol; EtO/Li = 0.2) of ethylene oxide; the reaction is allowed to proceed over a 120 minute time.

The resulting PPO has a methyl silylation degree of 21.3 mol % and an aromatic silylation degree of 32.4 mol %. The molar percentage of ar-OH is of 1.4%, and the molar percentage of methyl-bonded -OH is of 12.3%.

Example 3 - Comparative Example

102 g (850 mmol) of PPO is charged to a jacketed reactor of 3 litres of capacity, kept under a flowing nitrogen stream, and equipped with mechanical stirring means, loading funnel, thermocouple well and pressure switch, and is suspended in 1.7 litres of tetrahydrofuran (THF). Said PPO has the same characteristics as reported in Example 1.

The resulting suspension is thermostatted at 25°C, and then n-butyl-lithium (850 mmol; Li/PPO = 1) is added, with said total amount being subdivided into three portions of 283.3 mmol each, and each portion being added over an addition time of 3 minutes, and with time intervals between the addition of successive portions, of 5 minutes. The total metallation time is of about 30 minutes.

To the suspension of metallated PPO, 73.8 g (680 mmol; Si/Li = 0.8) is then added of trimethylchlorosilane and is allowed to react over a 60 minute reaction time; then 7.5 g (170 mmol; EtO/Li = 0.2) of ethylene oxide is added and the reaction is allowed to proceed over a 120 minute time.

The resulting PPO has a methyl silylation degree of 34.6 mol % and an aromatic silylation degree of 18,3 mol %. The molar percentage of methyl-bonded -OH is lower than 0.5%, and the molar percentage of ar-OH is of 14.4%

Example 4

Preparation and Characterization of Flat Membranes

Samples of 1.5 g modified PPO obtained from Examples 1-3 are dissolved, with mild stirring, in 7.5 ml of chloroform at room temperature. When dissolution is complete, the resulting solution is allowed to rest for approximately 15 minutes, and then is spread on a glass sheet, to yield a layer, the thickness of which is made even by the Gardner blade device with a 15-mil gap, by operating according to ASTM D-823-53 (1970) and according to D-823 procedure in order to prepare the membrane to be tested.

Most solvent mixture is allowed to slowly evaporate at room temperature, by initially placing the sheet for a 15-minute time under a glass bell saturated with chloroform vapours, and then for a further 15-minute time under a flowing air stream, under a suction hood. The last traces of solvent are removed by an overnight treatment in an oven (80°C) under a vacuum of about 16 mm Hg.

The polymeric film is removed from the glass sheet by dipping said coated glass sheet into water; the membrane is then dried between two sheets of filter paper, and is dried in a vacuum oven.

A film portion cut from the resulting film is bonded in the sample-holder, so as to leave a free surface-area of 9 $cm^2$ for permeation.

In Table 1, the permeability coefficients for carbon dioxide, methane, oxygen and nitrogen are reported, which were obtained by testing the polymeric films for permeability by means of LYSSY GPM 200 apparatus, at the temperature of 35°C, and with a difference in permeating gas partial pressure, of 76 cm Hg. In Table 1 the value of the thicknesses of films submitted to this test is reported as micrometres. Such a thickness is obtained by measuring, with a comparator, the thickness of the film at 20 equidistant points and then averaging the read values.

In the table, also the selectivity values:

* alpha 1 = $P(O_2)/P(N_2)$
* alpha 2 = $P(CO_2)/P(CH_4)$.

are reported.

Table 1

| Membrane Example No. | Thick ness ($\mu$m) | P($CO_2$) | P($CH_4$) | P($O_2$) | P($N_2$) | Alpha 1 | Alpha 2 |
|---|---|---|---|---|---|---|---|
| | | ($10^{-10}$ STP.cc/$cm^2$.s.cm Hg) | | | | | |
| 1 | 72 | 167 | 16.9 | 39.0 | 9.3 | 4.2 | 9.9 |
| 2 | 59 | 205 | 22.6 | 54.5 | 13.7 | 4.0 | 9.1 |
| 3 (comp. example) | 68 | 144 | 15.7 | 24.2 | 8.3 | 3.9 | 9.2 |

Example 5

Preparation and properties of the asymmetrical membrane

The modified PPO obtained from Example 2 is transformed into an asymmetrical membrane by means of the phase reversal technique: 2 g of product, obtained as disclosed in Example 2, is dissolved in 4.2 g of N-formyl-piperidine (concentration: 33% by weight/weight). The solution is kept standing 4 hours at 50°C, in order to allow any possibly present air bubbles to escape.

The solution is subsequently applied as a layer on a glass sheet at 30°C, using a sliding steel cylinder with a peripheral protruding ridge at both its ends, extending for a thickness of 300 $\mu$m. The asymmetrical membrane is prepared by sliding the cylinder on the solution cast on said glass sheet. In that way, a uniform polymer distribution is obtained. The resulting membranes have a size of 30 cm x 20 cm.

The glass sheet is kept standing at 60°C for a 1-minute time, and then is dipped into a water bath at 25°C. inside the coagulation bath, the phase reversal -- and consequently the complete formation of the asymmetrical membrane -- taxes place. Once formed, the membrane is allowed to stand 4 hours inside a water washing bath at 25°C, and then is dried in an oven at 30°C.

A portion of about 3 cm x 3 cm of said asymmetrical membrane is bonded between two aluminum sheets of 11 cm x 11 cm of size, at the centre of which two corresponding bores of 1.6 cm of diameter have been respectively made, so as to leave a free open surface-area of 2 $cm^2$ available for gas passage.

The resulting specimen is mounted inside the LYSSY GPM 200 permeameter, and is used in order to measure the permeability constant (gas flow rate/pressure unit) for carbon dioxide, methane, oxygen and nitrogen, at the temperature of 35°C and under the pressure of 76 cm Hg of permeate gas. The measured values of permeability constant of membranes with the apparent thickness of 98 $\mu$m are reported in the following:

* $P(CO_2)$ = 46.7 x $10^{-6}$ cm$^3$ (STP) / cm$^2$ x s x cm Hg
* $P(CH_4)$ = 5.5 x $10^{-6}$ cm$^3$ (STP) / cm$^2$ x s x cm Hg
* $P(O_2)$ = 12.6 x $10^{-6}$ cm$^3$ (STP) / cm$^2$ x s x cm Hg
* $P(N_2)$ = 3.7 x $10^{-6}$ cm$^3$ (STP) / cm$^2$ x s x cm Hg
* $P(CO_2)/P(CH_4)$ = 8.5
* $P(O_2)/P(N_2)$ = 3.4

The selectivity displayed by the asymmetrical membrane is very close to the selectivity of the starting membrane, evidencing a nearly defect-free skin, the thickness of which, as calculated from the ratio of permeability/permeability coefficient for each gas, results to be of round 4 $\mu$m.

## Claims

1. Process for preparing a modified, amorphous poly-(2,6-dimethyl-poxyphenylene) (PPO), which comprises metallating PPO in two separate steps, and reacting metallated PPO firstly with a halogen-trimethylsilane and then with ethylene oxide, said process being characterized by the following steps:

   (I) a first metallation of PPO by means of a reaction of PPO with a metallating agent;
   (II) a first functionalization of said metallated PPO, by reaction with a halogen-trialkylsilane;
   (III) a second metallation of the resulting silylated PPO, by reaction of said silylated PPO with a further amount of metallating agent;
   (IV) a second functionalization of said sylilated and metallated PPO, by reaction with ethylene oxide;
   - with the total amount of metallating agent being comprised within the range of from 0.8 to 1.5 mol per each mol of monomer units contained in said PPO;
   - with the amount of metallating agent used in said step (I) being comprised within the range of from 0.6 mol to 1 mol per each mol of monomer units contained in said PPO;
   - with the amount of metallating agent used in said step (III) being comprised within the range of from 0.2 to 0.5 mol per each mol of monomer units contained in said PPO.

2. Process according to claim 1, characterized in that the metallation of PPO is carried out with the polymer being at least partially suspended in an inert organic solvent selected from liquid, aliphatic, cycloaliphatic or aromatic hydrocarbons, aliphatic ethers and cycloaliphatic ethers.

3. Process according to claim 2, characterized in that said organic solvent is selected from benzene, toluene, xylene and tetrahydrofuran.

4. Process according to claim 1, characterized in that in the metallation, the reaction is carried out with a suspension containing at least 5 parts by weight, up to 30 parts by weight and preferably from 6 to 10 parts by weight of PPO per each 100 parts by volume of solvent.

5. Process according to claim 1, characterized in that the metallating agent is an (alkali metal)-alkyl, or an alkali-metal hydride or an alkali-metal amide, and preferably a lithium-(C$_1$-C$_{12}$)-alkyl, in particular n-butyl-lithium, and in the step of PPO metallation the reaction is carried out at a temperature comprised within the range of from -30°C to 80°C and preferably at room temperature (20-25°C), over a time equal to, or longer than, about 15 minutes, and preferably comprised within the range of from 20 to 45 minutes.

6. Process according to claim 1, characterized in that the reaction between metallated PPO and halogen-trialkylsilane is carried out at a temperature comprised within the range of from 10°C to 80°C and preferably at room temperature (20-25°C), over a time of from 0.5 to 4 hours and preferably of the order of 2 hours; the amount of halogen-trialkylsilane being such as to interact to a nearly complete extent with PPO's metallated sites.

7. Process according to claim 6, characterized in that the halogen-trialkylsilane is trimethylchlorosilane,

8. Process according to claim 1, characterized in that the metallation of silylated PPO is carried out as claimed in claim 5.

9. Process according to claim 1, characterized in that silylated and metallated PPO is reacted with ethylene oxide, in the same organic solvent as used for metallation, by operating at a temperature comprised within the range of from -30°C to 80°C, preferably at room temperature (20-25°C), and over a time of from 0.5 to 30 minutes, preferably of the order of 1-5 minutes; with the amount of ethylene oxide being such as to interact to a nearly complete extent with silylated PRO's metallated sites.

10. Flat, homogeneous membranes and flat, asymmetrical membranes for the separation of gas mixtures, fabricated from modified PPO obtained according to the process of claim from 1 to 9.